# EUROPEAN PATENT APPLICATION

(11) **EP 3 855 372 A1**
(43) Date of publication of application: **28.07.2021**
(21) Application number: 19862571.7
(22) Date of filing: 04.09.2019
(51) Int. Cl.: G06Q 10/02, G06Q 30/04, G06Q 50/10

(54) **RESERVATION DEVICE, RESERVATION METHOD, AND RESERVATION SYSTEM**

(30) Priority: 18.09.2018 JP 2018173182
(71) Applicant: Telexistence Inc., Minato-ku Tokyo 105-0003 (JP)
(72) Inventor: FERNANDO Charith Lasantha, Tokyo 105-0003 (JP); ROD Jan, Tokyo 105-0003 (JP); IWASA Takashi, Tokyo 105-0003 (JP)
(74) Representative: Plougmann Vingtoft a/s
(86) International application number: PCT/JP2019/034797
(87) International publication number: WO 2020/059493

(57) **Abstract**

A reservation device 1 has: an operator information acquisition unit 131 for acquiring work information that indicates the content of work executed using one of a plurality of robots 2, in association with an operator ID for identifying an operator U who operates a robot 2; a selection unit 133 for selecting a use robot used by the operator U from the plurality of robots 2 on the basis of the content of work indicated by the work information; and a reservation processing unit 134 for causing a robot ID for identifying the use robot selected by the selection unit 133 and a reservation period for which the use robot is enabled for use to be stored by a storage unit 12 in association with the operator ID.

## Description

### TECHNICAL FIELD

The present invention relates to a reservation apparatus, a reservation method, and a reservation system for reserving a robot to be used.

### BACKGROUND OF THE INVENTION

A technique for reserving a robot to be used is known. Patent Document 1 discloses a system for managing reservation data for using a controllable robot via a network.

### PRIOR ART

### PATENT DOCUMENT

[Patent Document 1] Japanese Unexamined Patent Application Publication No 2005-064837

### SUMMARY OF INVENTION

### PROBLEMS TO BE SOLVED BY THE INVENTION

In a conventional system, it is assumed that a robot which an operator makes a reservation for is predetermined. However, when there are a number of robots that can be used by any operator, it is difficult for the operator to reserve an appropriate robot.

The present disclosure focuses on this point, and its object is to make it possible to reserve a robot suitable for a task to be performed by an operator using a robot from among a number of robots.

### MEANS FOR SOLVING THE PROBLEMS

A reservation apparatus according to a first aspect of the present invention has: an operator information acquisition part that acquires task information indicating contents of a task to be executed using any of a plurality of robots in association with operator identification information for identifying an operator operating a robot; a selection part that selects a robot to be used by the operator from among the plurality of robots on the basis of the contents of the task indicated by the task information; and a reservation processing part that causes a storage part to store, in association with the operator identification information, robot identification information for identifying the robot to be used selected by the selection part and a reservation period during which the robot to be used becomes available.

The selection part may transmit candidate robot information indicating one or more candidate robots available for the operator to use from among the plurality of robots to an information terminal used by the operator, and select the candidate robot selected from among the one or more candidate robots received from the information terminal as the robot to be used.

The operator information acquisition part may acquire the task information indicating a place where the task is performed, as the contents of the task, and the selection part may further select the robot to be used on the basis of the place indicated by the task information.

The selection part may select an operation apparatus to be used by the operator from among the plurality of operation apparatuses available for any task of the plurality of robots on the basis of the contents of the task, and the reservation processing part may cause the storage part to store the operator identification information, the robot identification information, operation apparatus identification information for identifying the operation apparatus to be used selected by the selection part, and a reservation period during which the robot to be used and the operation apparatus to be used become available.

The selection part may select a combination of the robot to be used and the operation apparatus to be used on the basis of the contents of the task.

The selection part may transmit, to an information terminal used by the operator, candidate robot information indicating one or more candidate robots that can be used by the operator and candidate operation apparatus information indicating one or more candidates operation apparatuses, and select the robot to be used and the operation apparatus to be used on the basis of information indicating a result of a selection by the operator in the information terminal.

The operator information acquisition part may acquire position information indicating a location of the operator, and the selection part may further select the operation apparatus to be used on the basis of the location indicated by the position information.

The selection part may select one or more candidate robots that can be used for the contents of the task from among the plurality of robots, and select an operation apparatus that can operate the selected one or more candidate robots from among the plurality of operation apparatuses as the operation apparatus to be used.

The operator information acquisition part may acquire, from a storage medium storing a rate, fee information indicating a robot usage fee of each of the plurality of robots and an apparatus usage fee of each of the plurality of operation apparatuses, and acquire, from the operator, budget information indicating a budget of the operator, and the selection part may select the robot to be used and the operation apparatus to be used on the basis of the budget indicated by the budget information, the robot usage fee, and the apparatus usage fee.

The operator information acquisition part may acquire a robot usage fee of each of the plurality of robots from a storage medium storing a rate, and acquire reward information indicating a reward amount which the operator can receive for the task from the operator, and the selection part may select the robot to be used on the basis of the relationship between the robot usage fee and the reward amount.

The reservation apparatus may further have a skill storage part that stores an operating skill of the operator in association with the operator identification information and robot identification information of a robot which the operator has used among the plurality of robots, wherein the selection part may select, by referencing the skill storage part, the robot to be used on a condition that the operating skill of the operator corresponding to the robot to be used is equal to or higher than an allowable level.

The reservation apparatus may further have an information providing part that provides, to the operator, job information indicating a plurality of tasks for which a worker is wanted, wherein the operator information acquisition part may acquire, as the task information, information including contents of the task selected by the operator from among the plurality of tasks indicated by the job information provided by the information providing part.

The selection part may select the robot to be used corresponding to the contents of the task indicated by the task information when the operator information acquisition part acquires the task information from the operator, and the reservation processing part may reserve the robot to be used selected by the selection part and notifies a profile of the operator to a provider of the job information.

The reservation apparatus may further have a robot information acquisition part that acquires robot information indicating an action status of the robot, wherein the selection part may select the robot to be used from among a plurality of robots whose action statuses are indicated as not in action by the robot information.

The robot information acquisition part may acquire, as the robot information, operation data which is transmitted to the robot from an operation apparatus for operating the robot.

The reservation processing part may transmit information for permitting the robot to perform an action based on the operation data transmitted to the robot from an operation apparatus for operating the robot within the reservation period.

The selection part may select the robot to be used on the basis of frequency of use of the plurality of robots.

The selection part may select another robot from the plurality of robots on the basis of the contents of the task when the selection part detects that the robot operated by the operator has broken down during the operation, and
the reservation processing part may cause the storage part to store (i) the reservation period stored in the storage part in association with the broken-down robot and (ii) the robot identification information of the other robot selected by the selection part in association with each other.

The reservation processing part may notify the operator of information indicating the date and time the other robot is available if there is no other robot that can be selected by the selection part at a point in time when the robot has broken down.

The selection part may select, as the robot to be used, a second robot that can be used for another task in a time period between the plurality of tasks performed by a first robot, and the reservation processing part 134 may cause the storage part to store robot identification information of the first robot in association with a reservation period of the first robot and robot identification information of the second robot in association with a reservation period of the second robot.

The selection part may select the robot to be used on the basis of a time difference between a place where the operator is scheduled to operate the robot and a place where the robot to be operated by the operator performs an action.

The reservation processing part may cause the storage part to store the reservation period by correcting a desired reservation period acquired from the operator on the basis of a time difference between a place where the operator is scheduled to operate the robot and a place where the robot to be operated by the operator performs an action.

A reservation method according to a second aspect of the present invention has the steps of acquiring task information indicating contents of a task to be executed using any of a plurality of robots in association with operator identification information for identifying an operator operating a robot; selecting a robot to be used by the operator from the plurality of robots on the basis of the content of task indicated by the task information; and causing a storage part to store, in association with the operator identification information, robot identification information for identifying the selected robot to be used and a reservation period during which the robot to be used becomes available, that are executed by a computer.

A reservation system according to a third aspect of the present invention includes a reservation apparatus that manages a reservation status of a robot; and an information terminal capable of communicating with the reservation apparatus; wherein the reservation apparatus includes an operator information acquisition part that acquires task information indicating contents of a task to be executed using any of a plurality of robots from the information terminal, a selection part that selects a robot to be used by the operator who uses the information terminal from among the plurality of robots on the basis of the content of task indicated by the task information, and a reservation processing part that causes a storage part to store, in association with identification information for identifying the operator, robot identification information for identifying the robot to be used selected by the selection part, and transmitting reservation information indicating a reservation period during which the robot to be used becomes available to the information terminal, wherein the information terminal includes a display part that displays the reservation information received from the reservation processing part.

### EFFECT OF THE INVENTION

According to the present embodiment, an effect of reserving a robot suitable for a task to be performed by an operator using a robot from among a number of robots can be achieved.

### BRIEF DESCRIPTION OF THE DRAWINGS

FIG. 1 shows an outline of a reservation system.
FIG. 2 shows a functional configuration of a reservation apparatus.
FIG. 3 shows an exemplary robot database.
FIG. 4 shows an exemplary operation apparatus database.
FIG. 5 shows an exemplary skill database.
FIGS. 6A and 6B each show an exemplary reservation screen displayed on an information terminal by a selection part 133.
FIGS. 7A and 7B each show an exemplary screen for selecting a robot.
FIG. 8 shows an operation sequence of the reservation apparatus and the information terminal in the reservation system.
FIG. 9 shows a configuration of a reservation apparatus according to a variation example.

### DETAILED DESCRIPTION OF THE INVENTION

### [Outline of a reservation system S]

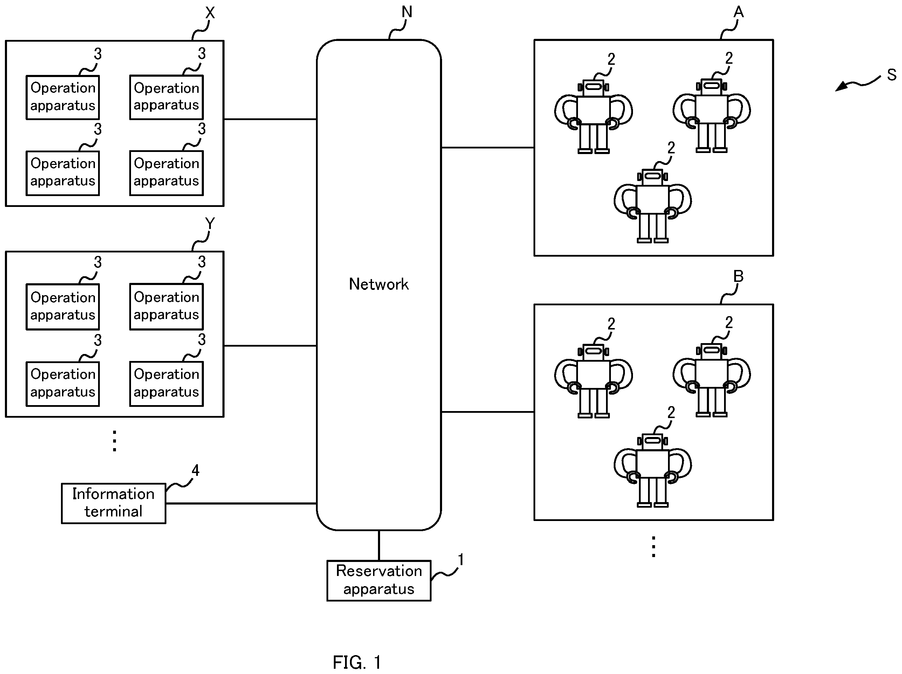

FIG. 1 shows an outline of a reservation system S. The reservation system S is a system for reserving a robot 2 and an operation apparatus 3 which are suitable for a task to be performed by an operator U from (i) a plurality of robots 2 and (ii) a plurality of operation apparatuses 3 for operating the robots 2 that are both registered in advance in the reservation system S. The robots 2 and the operation apparatuses 3 provide a telexistence environment in which the operator U operates the robot 2 in real time while feeling as if an object or a person at a remote location is nearby.

The robot 2 is a robot that can be remotely operated by the operator U via a network N using the operation apparatus 3. The plurality of robots 2 include a plurality of types of robots 2 having different functions. The plurality of types are for, for example, shopping, games, sightseeing, carrying baggage, or sightseeing guidance.

A robot 2 having a shopping function has a configuration for allowing the operator U to feel as if he/she is actually shopping while being in a remote location by image-capturing and touching the goods in a store in response to an operation of the operator U. Specifically, the robot 2 having the shopping function has a camera that captures an image of a surrounding state; a sensor that detects the sense of touch such as temperature, pressure, vibration, or the like of when touching an object with one's hand; an actuator that moves the hand and finger; a speaker that outputs the voice generated by the operator U; and a communication controller that transmits a captured image generated by the camera and a signal output by the sensor to the operation apparatus 3 and receives instructions from the voice of the operator U and the operation apparatus 3.

A robot 2 having a game function has a configuration for allowing the operator U to feel as if he/she is actually playing games at a game center while being in a remote location by playing the games in response to an operation of the operator U. Specifically, the robot 2 having the game function may have the same function as that of the robot 2 having the shopping function, but does not need to have the speaker. It is desirable that the robot 2 having the game function has an actuator that can move the hand and finger at higher speed than the robot 2 having the shopping function.

A robot 2 having a sightseeing function has a configuration for allowing the operator U to feel as if he/she is actually walking in tourist spots while being in a remote location by visiting the tourist spots in response to an operation of the operator U. Specifically, the robot 2 having the sightseeing function may have the same function as the robot 2 having the shopping function, but it is desirable to have a higher moving performance than the robot 2 having the shopping function so that the robot 2 having the sightseeing function can move around the streets or go up the stairs.

A robot 2 having a baggage-carrying function has a configuration for allowing the operator U to do his/her work of carrying baggage while being in a remote location by carrying baggage in response to an operation of the operator U. Specifically, the robot 2 having the baggage-carrying function may have the same function as the robot 2 having the shopping function, but it is desirable to have an actuator capable of lifting heavy baggage.

A robot 2 having a sightseeing-guide function has a configuration for allowing the operator U to do his/her work of guiding a tourist while being in a remote location by guiding the tourist around tourist spots in response to an operation of the operator U. Specifically, the robot 2 having the sightseeing-guide function may have the same function as the robot 2 having the shopping function, but it is desirable to have a function of translating the voice spoken in Japanese by the operator U into foreign languages so that the robot 2 having the sightseeing-guide function can guide tourists coming from various countries.

These various types of robots 2 are on standby in various places when they are not in use. In the example shown in FIG. 1, the plurality of robots 2 are on standby in a shopping mall A and in a tourist information center B.

The operation apparatus 3 is a device for the operator U to control the robot 2. The operation apparatus 3 identifies movement of the operator U wearing the operation instrument, and transmits a signal indicating the identified movement to the reservation apparatus 1. The operation apparatus 3 identifies the movement of the operator U on the basis of the signal received from the sensors of the operation instrument worn by the operator U, for example. The operation apparatus 3 may radiate infrared light to the operator U, and identify the movement of the operator U on the basis of reflected light resulting from the irradiated infrared light.

In addition, the operation apparatus 3 may notify the operation instrument worn by the operator U about the captured image and perceptual information indicating the sense of touch received from the robot 2 via the network N. The captured image is displayed on a display of goggles worn by the operator U. Each operation instrument the operator U attaches to his/her hands, feet, arms, or the like changes temperature or vibrates on the basis of the perceptual information. Due to these configurations, the operator U can experience the surrounding environment of the robot 2 in a place away from the robot 2 with a feeling as if he/she is in the robot 2.

The plurality of operation apparatuses 3 include a plurality of types of operation apparatuses 3 in which types of operable robots 2 are different or functions that can be executed by the robot 2 are different. The plurality of types of operation apparatuses 3 may be, in a similar manner as the plurality of types of robots 2, for shopping, games, sightseeing, carrying baggage, sightseeing guidance, or the like, or may be other types. For example, there may be an operation apparatus 3 that corresponds to all the functions of shopping, games, sightseeing, carrying baggage, or sightseeing guidance, or there may be an operation apparatus 3 that is capable of executing only some of the functions the robot 2 has.

The various types of operation apparatuses 3 are installed in various places. The operator U can remotely operate the robot 2 using the operation apparatus 3 installed at a desired place, such as an operation apparatus 3 installed near home and an operation apparatus 3 installed near wherever he/she is. In the example shown in FIG. 1, the plurality of the operation apparatuses 3 are installed respectively in a place X and a place Y. Also, these operation apparatuses 3 may be configured to be stored one set each in, for example, a briefcase. Since the operation apparatuses 3 are configured in this manner, the operator U can easily transport the operation apparatuses 3 to anywhere he/she wants to use them, and then remotely operate the robot 2.

The operator U can reserve the robot 2 to be used and the operation apparatus 3 to be used by using the information terminal 4 which he/she can use himself/herself. At this time, the operator U can reserve the appropriate robot 2 and the operation apparatus 3 by entering contents of tasks that he/she wants to do using the robot 2. The information terminal 4 may be any electronic device, such as a computer, a smart phone, or a tablet, having an operation part that inputs data, a display that displays data, and a communication controller that transmits and receives data. It should be noted that, when the operator U reserves the above-described transportable operation apparatuses 3, the reservation apparatus 1 may execute, a process of issuing a delivery slip for a home delivery service so as to transport the transportable operation apparatuses 3, prior to a reservation period of the robot 2, to a place (e.g., home, etc.) designated by the operator U or the like. In this case, the reservation apparatus 1 may also issue a return-delivery slip so that the transportable operation apparatuses 3 will be returned after the end of the reservation period. Hereinafter, the configuration and operation of the reservation apparatus 1 will be described in detail.

### [Functional configuration of the reservation apparatus 1]

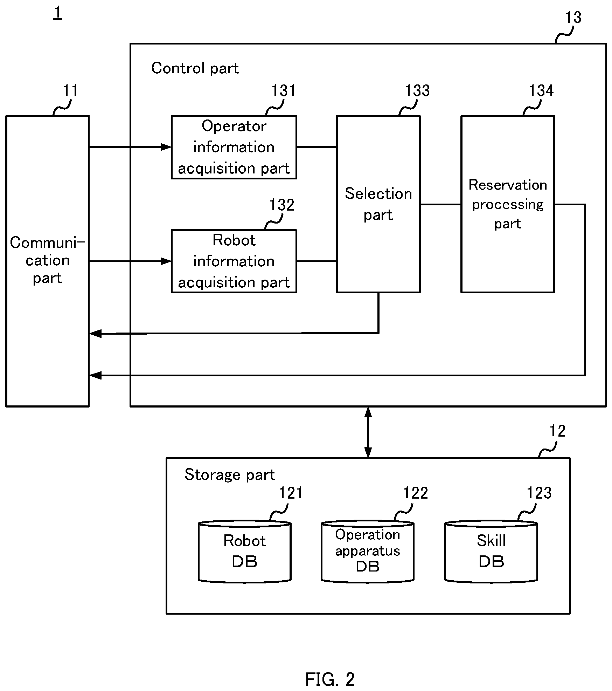

FIG. 2 shows a functional configuration of the reservation apparatus 1. The reservation apparatus 1 includes a communication part 11, a storage part 12, and a control part 13. The control part 13 includes an operator information acquisition part 131, a robot information acquisition part 132, a selection part 133, and a reservation processing part 134.

The communication part 11 is a communication interface for transmitting and receiving data via the network N, and includes, for example, a local area network (LAN) controller. The communication part 11 receives operator information about the operator U from the information terminal 4 via the network N and inputs the received operator information to the operator information acquisition part 131. The operator information is, for example, task information indicating task contents entered by the operator U in the information terminal 4 and position information indicating a position of the operator U. Further, the communication part 11 receives robot information about a state of the robot 2 from the robot 2 via the network N, and inputs the received robot information to the robot information acquisition part 132.

The storage part 12 includes a storage medium such as a read only memory (ROM), a random access memory (RAM), and a hard disk. The storage part 12 stores programs to be executed by the control part 13. Also, the storage part 12 stores various types of databases. The storage part 12 stores a robot database 121, an operation apparatus database 122, and a skill database 123, for example.

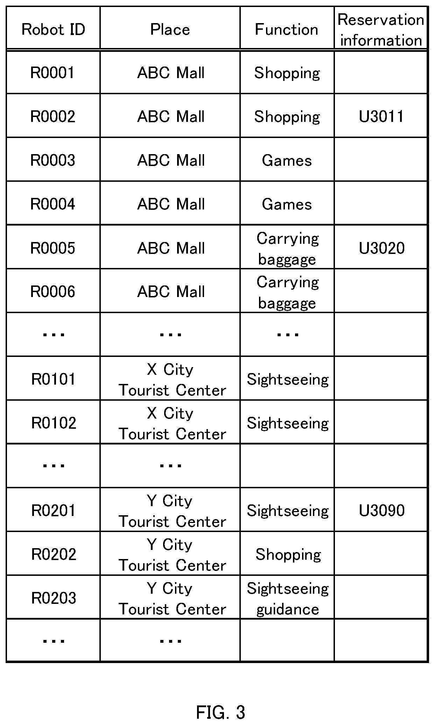

FIG. 3 shows an exemplary robot database 121. In the robot database 121, (i) robot identification information (hereinafter referred to as a robot ID) for identifying the robot 2, (ii) information indicating a place where the robot 2 is installed, (iii) the functions that the robot 2 can execute, and (iv) reservation information indicating a reservation status of the robot 2 are associated with each other. The information indicating the place where the robot 2 is installed may be any information that can help identify the place, such as a name, address, or latitude/longitude information of a store or a facility.

The functions that can be executed by the robot 2 are functions corresponding to the task contents, such as the shopping function that enables the operator U to move the robot 2 to a store and do his/her shopping by a remote operation, the game function that enables the operator U to move the robot 2 to a game center and play games by the remote operation, the baggage-carrying function that enables the operator U to carry baggage by the remote operation, or the like. The functions that the robot 2 can execute are not limited to the functions corresponding to the task contents, and may be functions corresponding to operable contents, such as an image-capturing function, a function of moving the finger, or a function of detecting temperature, pressure, vibration, or the like with the finger.

The reservation information is information in which the date and time are associated with identification information of the operator U (hereinafter referred to as an operator ID) who made the reservation. In FIG. 3, only one operator ID is shown in a reservation information column, but the reservation information may include a plurality of operator IDs and reservation dates and times associated with the respective operator IDs.

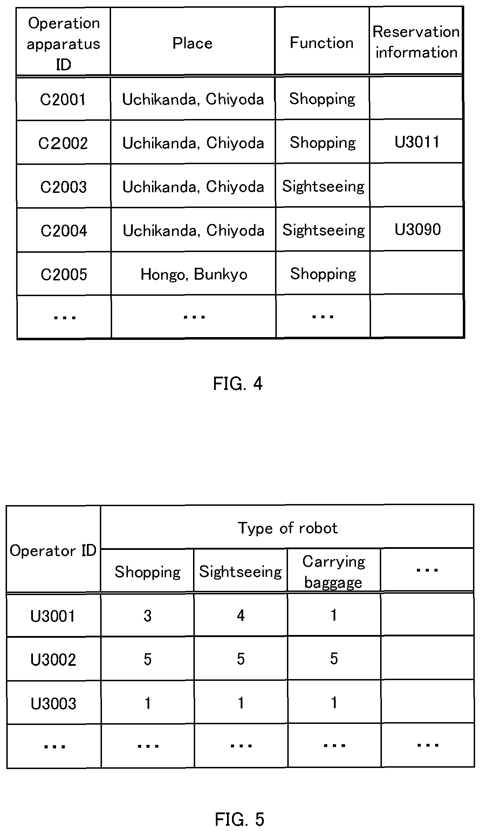

FIG. 4 shows an exemplary operation apparatus database 122. In the operation apparatus database 122, (i) operation apparatus identification information (hereinafter referred to as an operation apparatus ID) for identifying the operation apparatus 3, (ii) information indicating the place where the operation apparatus 3 is installed, (iii) functions that can be performed using the operation apparatus 3, and (iv) reservation information indicating the reservation status of the operation apparatus 3 are associated with each other. The information indicating the place where the operation apparatus 3 is installed may be any information as long as it can identify the place, such as a name, an address, or latitude/longitude information of a store or a facility.

The functions that can be performed using the operation apparatus 3 are the functions of the robot 2, for example, shopping, games, and carrying baggage, that can be performed by the operator U using the operation apparatus 3. The functions that can be performed using the operation apparatus 3 are not limited to the functions of the robot 2, and may include a function of displaying the captured image transmitted from the robot 2, a function of imparting tactile sensations based on tactile information such as temperature, pressure, and vibration transmitted from the robot 2 to the operator U, a maximum speed at which the robot 2 can be moved, or the like.

The reservation information is information in which the date and time and the operator ID of the operator U who made the reservation are associated with each other. In FIG. 4, only one operator ID is shown in the reservation information column, but the reservation information may include a plurality of operator IDs and reservation dates and times associated with the respective operator IDs.

FIG. 5 shows an exemplary skill database 123. The skill database 123 is an aspect of a skill storage part that stores the operating skill of the operator U in association with the operator ID and the robot ID of the robot 2 which the operator U has used among the plurality of robots 2. In the skill database 123, (i) the operator ID and (ii) the skill of the operator U for each function executable using the robot 2 and the operation apparatus 3 are associated with each other. Since it is considered that difficulty of operation differs for each combination of the robot 2 and the operation apparatus 3, the skill database 123 may associate the skill with each combination of the robot 2 and the operation apparatus 3.

Returning to FIG. 2, the control part 13 will be described in detail. The control part 13 includes, for example, a central processing unit (CPU). The control part 13, by executing a program stored in the storage part 12, functions as the operator information acquisition part 131, the robot information acquisition part 132, the selection part 133, and the reservation processing part 134.

The operator information acquisition part 131 acquires task information indicating contents of the task to be executed using any of the robots 2 of the plurality of robots 2, via the communication part 11, in association with operator ID for identifying the operator U for operating the robot 2. The operator information acquisition part 131 acquires task information indicating, a place where the task is performed, for example, as the contents of the task. The operator information acquisition part 131 may further acquire position information indicating a location of the operator U. The operator information acquisition part 131 may acquire, as a state of the operator U, information indicating whether or not the operator U has logged in for using the robot 2.

The robot information acquisition part 132 acquires robot information indicating an action status of the robot 2 via the communication part 11. The robot information acquisition part 132 acquires the robot information transmitted by the robot 2 by requesting to the robot 2, for example, the robot information indicating whether the robot 2 is in action or not. The robot information acquisition part 132 may acquire, as the robot information, operation data which is transmitted to the robot 2 from the operation apparatus 3 for operating the robot 2. The robot information acquisition part 132 inputs the acquired robot information to the selection part 133.

The selection part 133 selects a robot 2 for the operator U to use from among the plurality of robots 2 on the basis of the contents of the task indicated by the task information input from the operator information acquisition part 131. The selection part 133 references the robot database 121 shown in FIG. 3, for example, and selects the robot 2 having the function corresponding to the contents of the task.

The selection part 133 may transmit, as candidate-robot information indicating a candidate robot that can be used by the operator U, information for identifying the selected robot 2 to the information terminal 4, and may select the robot 2 selected by the operator U's operation from among a plurality of candidate robots, as the robot 2 to be used by the operator U. For example, the selection part 133 transmits the candidate robot information indicating one or more candidate robots that are available for the operator U to use from among the plurality of robots 2 to the information terminal 4 used by the operator U, and selects the candidate robot selected from among the one or more candidate robots received from the information terminal 4 as a robot to be used.

The selection part 133 may further select the robot 2 to be used on the basis of the location indicated by the task information. The selection part 133 transmits, to the information terminal 4, the candidate robot information indicating the robot 2 installed in an implementation location for the task indicated by the task contents input from the operator information acquisition part 131, for example. Specifically, when the task content is shopping in ABC Shopping Mall, the selection part 133 selects the robots 2 of R0001 to R0006 whose locations are "ABC Mall" in the robot database 121 shown in FIG. 3, and transmits the candidate robot information including the robot IDs of the selected robots 2 to the information terminal 4.

The selection part 133 may select an operation apparatus for the operator U to use from among the plurality of the operation apparatuses 3 available for any task of the plurality of robots 2 on the basis of the contents of the task. The selection part 133 references, for example the operation apparatus database 122 shown in FIG. 4, and selects the operation apparatus 3 having the function corresponding to the contents of the task. The selection part 133 may transmit, as candidate-apparatus-to-be-used information indicating a candidate apparatus to be used which is available for the operator U, information for identifying the selected operation apparatus 3 to the information terminal 4, and may select the operation apparatus 3 selected by the operator U's operation from among a plurality of candidate operation apparatuses, as the operation apparatus 3 to be used by the operator U.

Even if the robot 2 suitable for the task contents is selected, the operator U cannot accomplish the task unless the operator U can use the operation apparatus 3 suitable for the task contents. Therefore, the selection part 133 may select a combination of the robot to be used and the operation apparatus to be used on the basis of contents of the task. For example, the selection part 133 transmits, to the information terminal 4 used by the operator U, (i) the candidate robot information indicating one or more candidate robots available for the operator U to use and (ii) the candidate operation apparatus information indicating one or more candidate operation apparatuses, and selects the robot to be used and the operation apparatus to be used on the basis of information indicating a result of the selection by the operator U in the information terminal 4.

Specifically, the selection part 133 references the robot database 121 shown in FIG. 3 and the operation apparatus database 122 shown in FIG. 4, and selects the robot 2 and the operation apparatus 3 having functions corresponding to the contents of the task. When a model of the robot 2 that can be operated using the operation apparatus 3 is identified in the operation apparatus database 122, the selection part 133 may select one or more candidate robots that can be used for the contents of the task from among the plurality of robots 2, and after selecting the candidate robots, may select, as the operation apparatus to be used, the operation apparatus 3 that can operate the selected one or more candidate robots from among the plurality of the operation apparatuses 3.

The selection part 133 may transmit information for identifying the selected robot 2 and the selected operation apparatus 3 to the information terminal 4 as candidate-model information indicating a combination of the robot 2 and the operation apparatus 3 that are available for the operator U. In this case, the selection part 133 selects the combination of the robot 2 and the operation apparatus 3 selected by the operator U's operation from among a plurality of combinations of the robot 2 and the operation apparatus 3, as the robot 2 and the operation apparatus 3 to be used by the operator U.

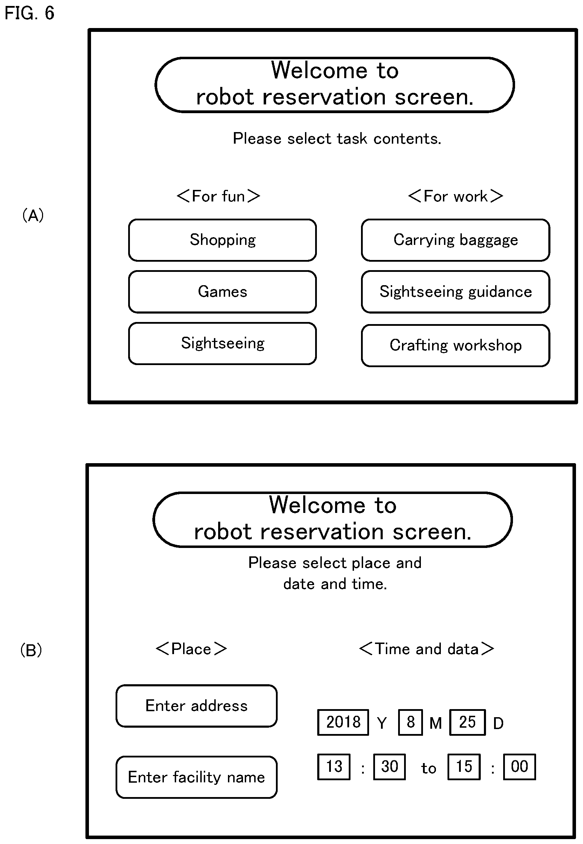

FIGS. 6A and 6B each show an exemplary reservation screen displayed on the information terminal 4 by the selection part 133. FIG. 6A shows a screen for selecting task contents that appears first after the operator U logs in. On the screen for selecting the task contents, the task contents corresponding to a function column of the robot database are displayed, for example. In the example shown in FIG. 6A, "Shopping," "Games," and "Sightseeing", which are for the purpose of amusement/pleasure, and "Carrying baggage," "Sightseeing guidance," and "Crafting workshop", which are for the purpose of work, are included as the task contents.

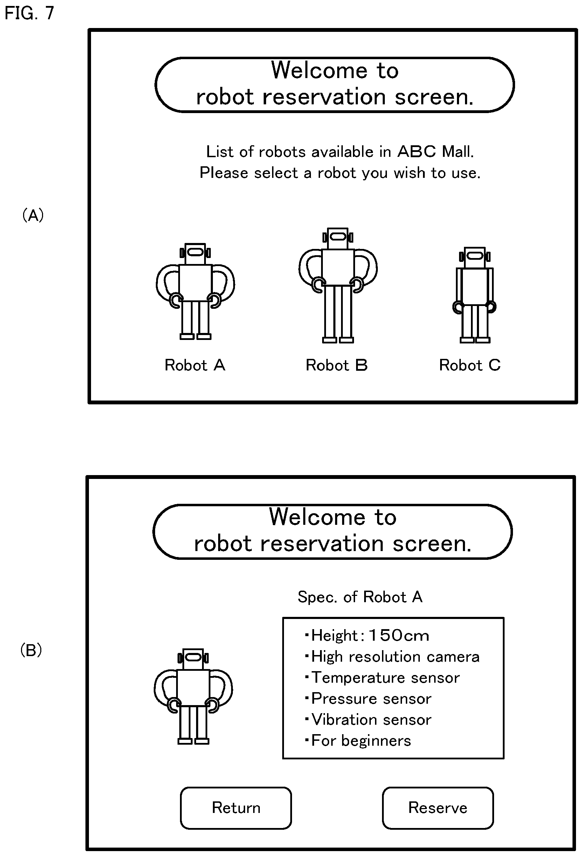

When the operator U selects a desired task content from the task contents displayed on FIG. 6A, the screen changes to a screen of FIG. 6B. The screen of FIG. 6B is a screen for selecting a location and the date and time to use the robot 2 and the operation apparatus 3. As a method of identifying the place, either a method of entering an address or a method of entering a facility name can be selected. When the operator U selects the place and the date and time, the screen changes to a screen shown in FIG. 7A or FIG. 7B.

FIGS. 7A and 7B each show an exemplary screen for selecting the robot 2. In FIG. 7A, candidate robots which are the robots 2 that can be used at the place and the date and time selected by the operator U are displayed. When the operator U selects an image of the robot A, the screen changes to FIG. 7B, and the detailed specification of the robot A selected by the operator U is displayed. When the operator U selects "Reserved", the selection part 133 notifies the reservation processing part 134 that the robot A is selected. When the operator U selects "Return", the selection part 133 returns the screen to FIG. 7A.

It should be noted that the selection part 133 may select the robot 2 to be used by the operator U on the basis of the time difference between (i) the place where the operator U is scheduled to operate the robot 2 and (ii) the place where the robot 2 to be operated by the operator U performs an action. For instance, suppose that the operator U is in Japan and the place where the task to be performed by the robot 2 is in Thailand which is 2 hours behind Japan. When the operator U can operate the robot 2 from 9 a.m. to 5 p.m., the selection part 133 converts the operable time period from 7 a.m. to 3 p.m. into Thailand time and selects the robot 2 that can be used between 7 a.m. and 3 p.m. in Thailand time.

Also, when the time period of the task to be performed by the operator U in Japan using the robot 2 in Thailand is from 10:00 a.m. to 6:00 p.m. in Thailand time, the selection part 133 converts the time from 10:00 a.m. to 6:00 p.m. in Thailand time into 12:00 p.m. to 8:00 p.m. in Japan time. Then, the selection part 133 selects the operation apparatus 3 which are available from 12:00 p.m. to 8 p.m. in Japan time. Since the selection part 133 selects the robot 2 and the operation apparatus 3 considering the time difference in this manner, even when the operator U operates the robot 2 from a remote location, the selection part 133 can appropriately select the available robot 2 and operation apparatus 3.

Returning to FIG. 2, the reservation processing part 134 will be described in detail. The reservation processing part 134 executes a process of reserving the robot 2 that can be used by the operator U. Specifically, the reservation processing part 134 reserves, as the robot to be used, a robot 2 selected by causing the storage part 12 to store, in association with the operator ID, (i) a robot ID for identifying the robot to be used which is selected by the selection part 133 and (ii) a reservation period during which the robot to be used becomes available. The reservation period includes (i) the date and time when the selected robot to be used becomes available and (ii) how long this robot is available for from that date and time. The reservation processing part 134 associates the reservation period with the operator ID in, for example, the robot database 121 shown in FIG. 3.

The reservation processing part 134 may cause the storage part 12 to store the reservation period by correcting a desired reservation period acquired from the operator U on the basis of the time difference between (i) the place where the operator U is scheduled to operate the robot 2 and (ii) the place where the robot 2 to be operated by the operator U performs an action. For example, suppose that the operator U is in Japan and the robot 2 reserved by the operator U is in Thailand which is 2 hours behind Japan. In this case, when the operator U made a reservation to use the robot 2 from 9:00 a.m. to 5:00 p.m. in Japan time, the reservation processing part 134 sets the reservation period from 7:00 a.m. to 3:00 p.m. in order to make the reservation on the basis of the time of the place where the robot 2 is located. In this way, it is possible to prevent the robot 2 from being double booked by a plurality of the operators U on the same date and time.

The reservation processing part 134 may cause the storage part 12 to store (i) the operator ID, (ii) the robot ID, (iii) the operation apparatus ID for identifying the operation apparatus to be used selected by the selection part 133, and (iv) the reservation period during which the robot to be used and the operation apparatus to be used become available, in association with each other. In this case, the reservation processing part 134 associates the operator ID with the reservation period in, for example, the robot database shown in FIG. 3 and the operation apparatus database shown in FIG. 4.

The reservation processing part 134 may transmit information for permitting the robot 2 to perform an action based on the operation data transmitted from the operation apparatus 3 to the robot 2 within the reservation period. For example, when a particular robot 2 is reserved together with a particular operation apparatus 3, the reservation processing part 134 transmits the reservation period and the operation apparatus ID of the operation apparatus 3 to the robot 2. Since the reservation processing part 134 operates in this manner, the robot 2 performs actions on the basis of operation instructions received within the reservation period and including the notified operation apparatus ID, and it is possible not to perform any action when other operation instructions are received. Therefore, the reservation apparatus 1 can prevent a problem that an operator U other than a particular operator U uses the robot 2 while the particular operator U is using the robot 2.

It should be noted that the reservation processing part 134 may determine a usage fee of the reserved robot 2 and the operation apparatus 3. The reservation processing part 134 determines the usage fee such that the greater the number of reservations of the robot 2 and the operation apparatus 3, the higher the usage fee. The reservation processing part 134 may determine a reward amount for the operator U when a task is performed using the robot 2. The reservation processing part 134 determines the reward amount such that the greater the number of reservations of the robot 2 for performing the same task as the task performed by the operator U, the lower the reward amount.

The selection part 133 may select a robot to be used and an operation apparatus to be used on the basis of various other conditions, and may cause the reservation processing part 134 to reserve the selected robot 2 and the selected operation apparatus 3. Various selection methods will be described below.

### (Selection based on the operator U skill)

The selection part 133 may select the robot to be used by referencing the skill database 123, on a condition that the operating skill of the operator U corresponding to the robot to be used is equal to or higher than an allowable level. For example, the selection part 133 identifies the type of the robot 2 used for performing the task indicated by the task contents acquired from the information terminal 4 by the operator information acquisition part 131, and identifies the operation skill of the operator U associated with the robot 2 of the identified type in the skill database 123. The selection part 133 selects, as a candidate robot, the robot 2 for which the operator U's operation skill is at a level equal to or higher than the level at which no safety issues are caused upon using the robot 2. Since the selection part 133 operates in this manner, it is possible to prevent an occurrence of a situation where the operator U uses the robot 2 which may cause an accident when operated by the operator U.

### (Selection based on the action status of the robot 2)

There may be a case where the robot 2 cannot be used by the date and time the operator U wishes to start using it if the selection part 133 selects a robot 2 that is already in action when he/she wants to use the robot 2 immediately. Therefore, the selection part 133 may select a robot to be used from among a plurality of robots 2 whose action statuses are indicated as not in action by the robot information which the robot information acquisition part 132 acquired from the robot 2. The selection part 133 may calculate a probability that the robot 2 enters an available state by the date and time when the operator U wants to start using it on the basis of any of (i) the contents of the task being performed using the robot 2, (ii) the skill of the operator U, (iii) history information indicating whether the operator U finished the task as scheduled in the past, and (iv) the date and time when the use of the robot 2 is started, and may determine whether or not a particular robot 2 can be used on the basis of the calculated probability.

When the robot information acquisition part 132 acquires, as the robot information, the operation data transmitted from the operation apparatus 3 which is used for operating the robot 2 to the robot 2, the selection part 133 may predict the time until the use period of the robot 2 ends on the basis of the operation contents indicated by the operation data. For example, when a predetermined time has elapsed since an operation of returning the arm of the robot 2 to the initial state is performed, the selection part 133 predicts that the robot 2 enters an available state after the time required for a use end process of the robot 2 has elapsed.

Since the selection part 133 selects the robot 2 for the operator U to use on the basis of the action status of the robot 2 in this manner, it is possible to avoid an occurrence of a problem that a robot 2 in an unavailable state is assigned to the operator U.

### (Selection based on the operator U's budget)

The operator information acquisition part 131 may further acquire fee information indicating a robot usage fee of each of the plurality of robots 2 and an apparatus usage fee of each of the plurality of operation apparatuses 3, and budget information indicating a budget of the operator U. For example, the operator information acquisition part 131 acquires the budget information entered by the operator U in the information terminal 4, and inputs the acquired budget information to the selection part 133. Also, the operator information acquisition part 131 acquires the usage fee of the robot 2 and the usage fee of the operation apparatus 3, which are stored in advance in the storage part 12. The operator information acquisition part 131 may acquire a robot usage fee and an apparatus usage fee from an external device. The selection part 133 selects the robot to be used and the operation apparatus to be used on the basis of the budget indicated by the budget information acquired by the operator information acquisition part 131 and the robot usage fee and the apparatus usage fee. Specifically, the selection part 133 presents, as the candidate robots and the candidate apparatuses to be used, the robots 2 and the operation apparatuses 3 within the budget indicated by the budget information to the operator U.

### (Selection based on the reward amount the operator U can obtain)

The operator information acquisition part 131 may further acquire reward information indicating (i) the usage fee of each of the plurality of robots 2 and (ii) a reward amount which the operator U can receive for the task. For example, the operator information acquisition part 131 acquires the reward information entered by the operator U in the information terminal 4, and inputs the acquired reward information to the selection part 133. In this case, the selection part 133 selects the robot to be used on the basis of a relationship between the usage fee of the robot 2 and the reward amount.

The reservation processing part 134 selects the robot 2 such that the reward amount is larger than the usage fee of the robot 2, for example. The reservation processing part 134 may select the robot 2 such that the reward amount is larger than the usage fees of the robot 2 and the operation apparatus 3. It should be noted that the operator information acquisition part 131 may estimate the reward amount obtained by the operator U using the robot 2 and the operation apparatus 3 on the basis of the task contents and acquired from the information terminal 4 and the skill of the operator U, and may input reward information indicating the estimated reward amount to the selection part 133.

### (Selection of the operation apparatus 3 based on the location of the operator U)

It should be noted that the operator U can also operate the robot 2 in a place away from the robot 2 by using the operation apparatus 3. Therefore, it is preferable for the operator U to use the operation apparatus 3 close to his/her location.

Therefore, when selecting the operation apparatus 3 to be used by the operator U, the selection part 133 may select the operation apparatus to be used on the basis of the location of the operator U indicated by the location information input from the operator information acquisition part 131 and further on the basis of an installation location of the operation apparatus 3 stored in the operation apparatus database 122. The selection part 133 references the operation apparatus database 122 shown in FIG. 4, for example, and selects an operation apparatus 3 whose installation location shown in a location column in the operation apparatus database 122 is in a predetermined distance from the location of the operator U. The predetermined distance can be set by the operator U using the information terminal 4 and is a distance which the operator U can travel within 30 minutes, for example.

The selection part 133 may change the predetermined distance on the basis of the number of operation apparatuses 3 within the predetermined distance. For example, when there is no operation apparatus 3 within the predetermined distance, the selection part 133 increases the predetermined distance until at least one operation apparatus 3 suitable for the task contents can be selected. The selection part 133 may transmit information for identifying the selected plurality of candidate apparatuses to be used, with the predetermined distances shown in an ascending order, to the information terminal 4.

### (Selection based on frequency of use)

When a particular robot 2 is used intensively, the intensively used robot 2 tends to deteriorate. Therefore, the selection part 133 may select the robot to be used on the basis of frequency of use of the plurality of robots 2. The selection part 133 references usage history of the robot 2 in the past, for example, and preferentially selects the robot 2 with a low frequency of use such that the frequency of use of each of the plurality of robots 2 which the operator U can use becomes even.

### (New selection when failure occurs)

If the robot 2 in use has broken down, it is necessary to switch to another robot 2. Therefore, when the operator U detects that the robot 2 has broken down during the operation, the selection part 133 selects another robot 2 from the plurality of robots 2 that can be used for the task on the basis of the contents of the task. The reservation processing part 134 reserves the other robot 2 by causing the storage part 12 to store (i) the reservation period stored in the storage part 12 in association with the broken-down robot 2 and (ii) the robot ID of the other robot 2 selected by the selection part 133 in association with each other. Since the selection part 133 and the reservation processing part 134 operate in this manner, even if the robot 2 in use has broken down, the operator U can continue the task.

The reservation processing part 134 may notify the operator U of information indicating the date and time the other robot 2 is available, if there is no other robot 2 that can be selected by the selection part 133 at a point in time when the robot 2 has broken down. The reservation processing part 134 notifies the operator U of the available date and time by, for example, transmitting information indicating the available date and time of the other robot 2 to the operation apparatus 3 or the information terminal 4 used by the operator U.

### [Operation sequence in the reservation system S]

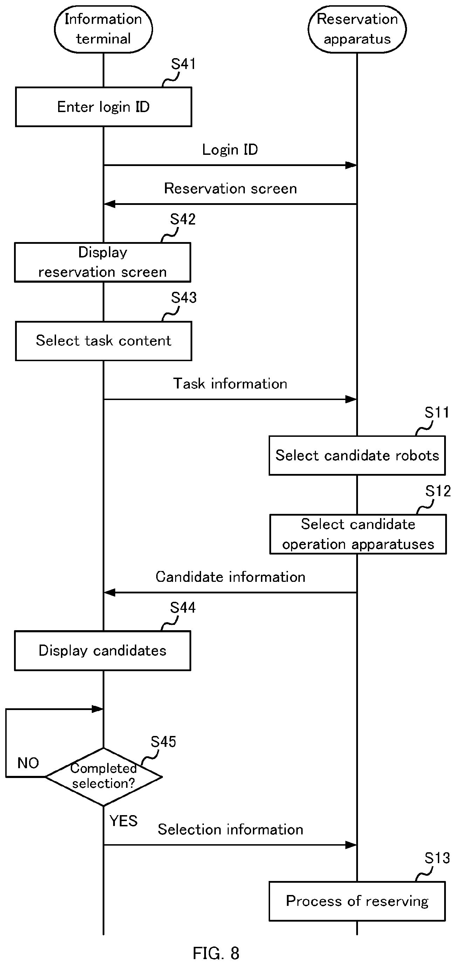

FIG. 8 shows an operation sequence of the reservation apparatus 1 and the information terminal 4 in the reservation system S. The sequence shown in FIG. 8 starts when the operator U accesses a reservation site for reserving the robot 2 and the operation apparatus 3 in the information terminal 4.

When the information terminal 4 accesses the reservation site, a screen for entering a login ID is displayed. When the login ID and a password are entered in the information terminal 4 (S41), the information terminal 4 transmits the login ID and the password to the reservation apparatus 1. When the login ID and the password match the combination of the login ID and the password registered in advance, the selection part 133 of the reservation apparatus 1 transmits data of the reservation screen to the information terminal 4 in order to display a screen for entering the task contents on the information terminal 4.

When receiving the data of the reservation screen, the information terminal 4 displays the reservation screen shown in FIG. 6A, for example (S42). When the operator U selects task content on the reservation screen (S43), the information terminal 4 transmits the task information indicating the selected task content to the reservation apparatus 1.

The selection part 133 of the reservation apparatus 1 selects one or more robots 2 that can be used by the operator U as the candidate robots on the basis of the task content indicated by the received task content (S11). The selection part 133 selects one or more operation apparatuses 3 that can be used by the operator U as the candidate operation apparatuses (S12). The selection part 133 transmits candidate information indicating the selected candidate robots and the candidate operation apparatuses to the information terminal 4.

Upon receiving the candidate information, the information terminal 4 displays the screen indicating one or more candidate robots, as shown in FIGS. 7A or 7B, and one or more candidate operation apparatuses (S44). When the operator U selects a desired candidate robot and a candidate operation apparatus from among the one or more candidate robots and candidate operation apparatuses (YES in S45), the information terminal 4 transmits selection information indicating the selected candidate robot and candidate operation apparatus to the reservation apparatus 1.

When the reservation apparatus 1 receives the selection information, the reservation processing part 134 executes a process of reserving (S13) by causing the storage part 12 to store the robot ID and the operation apparatus ID corresponding to the candidate robot and the candidate operation apparatus indicated by the selection information in association with the operator ID of the information terminal 4. With the above-described sequences, the operator U can reserve the robot 2 and the operation apparatus 3 required for the task by entering the task contents in the information terminal 4.

### [Variation example]

In the above description, the example where the selection part 133 selects, on the basis of the task content entered by the operator U, the robot 2 and the operation apparatus 3 for the operator U to use from among the plurality of robots 2 and the plurality of the operation apparatuses 3 has been described, but it can be assumed that there is a case where the operator U has not determined the task content. For example, there may be a case where the operator U is looking for a job that can be done using the robot 2 and the operation apparatus 3. Therefore, the reservation apparatus 1 may present to the operator U the tasks which the operator U can perform using the robot 2 and the operation apparatus 3.

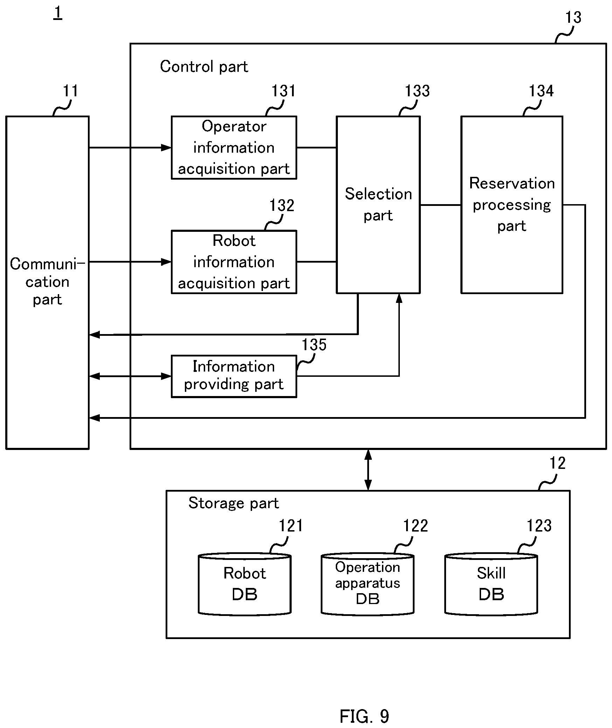

FIG. 9 shows a configuration of a reservation apparatus 1 according to a variation example. The reservation apparatus 1 shown in FIG. 9 differs from the reservation apparatus 1 shown in FIG. 2 in that it further includes an information providing part 135, and is the same in other respects.

The information providing part 135 provides job information indicating a plurality of tasks for which a worker is wanted. The information providing part 135 provides the job information to the operator U by acquiring job information from, for example, an external server that provides the job information and transmitting the acquired job information to the information terminal 4. The information providing part 135 provides the operator U with job information corresponding to a task that can be performed using the robot 2 among a plurality of pieces of job information acquired from the external server, for example. The job information includes information about the contents of the task, a period during which the task should be performed, and the reward amount. The operator U confirms the information indicated by the job information, and selects the job information when there is job information corresponding to the task he/she wishes to perform.

For example, the information providing part 135 causes the information terminal 4 to display, in association with each of the plurality of pieces of job information, the task contents, the date and time of the task, and a type of the robot 2 that needs to be used to perform the task. The information providing part 135 may further cause the information terminal 4 to display a type of operation apparatus 3 that needs to be used for the task. The operator U can select a task that he/she can handle by checking the task contents and the robot 2 that needs to be used.

The operator information acquisition part 131 acquires, as the task information, information including contents of the task selected by the operator U from among the plurality of tasks indicated by the job information provided by the information providing part 135, and provides the acquired task information to the selection part 133. The selection part 133 selects a robot 2 for the operator U to use on the basis of the contents of the task indicated by the acquired task information. Since the reservation apparatus 1 operates in this manner, the operator U can perform a task using the appropriate robot 2 even if he/she has not decided on which task to do.

The information providing part 135 may provide the task contents indicated by the job information to the selection part 133, acquire information for identifying the available robot 2 and the available operation apparatus 3 from the selection part 133, and provide the acquired information to the operator U together with the job information. At this time, the selection part 133 references the robot database and the operation apparatus database, selects a robot 2 and an operation apparatus 3 that are not reserved in the period indicated by the job information from the among the plurality of robots 2 and the plurality of operation apparatuses 3 that need to be used to perform the task contents indicated by the job information, and notifies the information providing part 135 of a result of this selection.

It should be noted that, when the operator U performs a remotely controlled task using the robot 2, an idle time may occur between tasks. For example, when the operator U performs the task of carrying baggage at a place A, he/she may be unable to perform transportation tasks between the time he/she had performed carrying baggage and the arrival of the next baggage. In such a case, it is desirable for the operator U to be able to perform other tasks using other robots 2 between tasks.

Therefore, the information providing part 135 may acquire, from a server of a company offering job openings for the task selected by the operator U or the information terminal 4, information about a time period in which the task takes place, and may provide the information terminal 4 with other job information about a task the operator U can perform in the idle time on the basis of the idle time in the acquired time period. When the operator U selects another task on the basis of the provided job information, the selection part 133 selects a second robot 2b that can be used for the other task in the time period between the plurality of tasks performed by a first robot 2a. The reservation processing part 134 reserves the first robot 2a and the second robot 2b by causing the storage part 12 to store the respective robot IDs of the first robot 2a and the second robot 2b in association with their respective reservation periods.

In this case, the operator U performs the transportation tasks using the first robot 2a at the place A from 10:00 a.m. to 10:30 a.m., performs cleaning tasks of a store using the second robot 2b at the place B from 10:30 a.m. to 11:00 a.m., and performs the transportation tasks using the first robot 2a at the place B from 11:00 a.m. to 12:00 p.m., for example. By reserving the robots 2 and the operation apparatuses 3 so that the reservation apparatus 1 can execute a plurality of tasks performed at a plurality of places in combination, the operator U can make effective use of his/her time by taking advantage of the characteristics of a remotely controlled task.

It should be noted that there may be a case where the company that posted job information wants to know the operator U's profile such as his/her skill for operating the robot 2 and his/her history of having experienced similar tasks. Therefore, when the operator information acquisition part 131 acquires the task information of the task that the operator U wants to perform from the operator U, the selection part 133 may select the robot 2 corresponding to the contents of the task indicated by the task information, and the reservation processing part 134 may reserve the robot 2 selected by the selection part 133 and provide the operator U's profile to a provider of the job information.

### [Effect of the reservation apparatus 1]

As described above, in the reservation apparatus 1, the operator information acquisition part 131 acquires the task information indicating the contents of the task to be executed using any of the plurality of robots 2 in association with the operator ID of the operator U who operates the robot 2. Then, the selection part 133 selects the robot for the operator U to use from among the plurality of robots 2 on the basis of the contents of the task indicated by the task information. The reservation processing part 134 causes the storage part 12 to store, in association with the operator ID, the robot ID of the robot to be used which is selected by the selection part 133 and the reservation period during which the robot to be used becomes available. With such a configuration of the reservation apparatus 1, a person who wants to perform a task using the robot 2 can easily select and reserve a robot suitable for the task from among a number of robots.

The present invention is explained based on the exemplary embodiments. The technical scope of the present invention is not limited to the scope explained in the above embodiments and it is possible to make various changes and modifications within the scope of the invention. For example, the specific embodiments of the distribution and integration of the apparatus are not limited to the above embodiments, all or part thereof, can be configured with any unit which is functionally or physically dispersed or integrated. Further, new exemplary embodiments generated by arbitrary combinations of them are included in the exemplary embodiments of the present invention. Further, effects of the new exemplary embodiments brought by the combinations also have the effects of the original exemplary embodiments.

### [Description of the reference numerals]

- 1: Reservation apparatus
- 2: Robot
- 3: Operation apparatus
- 4: Information terminal
- 11: Communication part
- 12: Storage part
- 13: Control part
- 121: Robot database
- 122: Operation apparatus database
- 123: Skill database
- 131: Operator information acquisition part
- 132: Robot information acquisition part
- 133: Selection part
- 134: Reservation processing part
- 135: Information providing part

## Claims

1. A reservation apparatus having:
an operator information acquisition part that acquires task information indicating contents of a task to be executed using any of a plurality of robots in association with operator identification information for identifying an operator operating a robot;
a selection part that selects a robot to be used by the operator from among the plurality of robots on the basis of the contents of the task indicated by the task information; and
a reservation processing part that causes a storage part to store, in association with the operator identification information, robot identification information for identifying the robot to be used selected by the selection part and a reservation period during which the robot to be used becomes available.

2. The reservation apparatus according to claim 1, wherein the selection part transmits candidate robot information indicating one or more candidate robots available for the operator to use from among the plurality of robots to an information terminal used by the operator, and selects the candidate robot selected from among the one or more candidate robots received from the information terminal as the robot to be used.

3. The reservation apparatus according to claim 1 or 2, wherein the operator information acquisition part acquires the task information indicating a place where the task is performed, as the contents of the task, and
the selection part further selects the robot to be used on the basis of the place indicated by the task information.

4. The reservation apparatus according to any one of claims 1 to 3, wherein the selection part selects an operation apparatus to be used by the operator from among the plurality of operation apparatuses available for any task of the plurality of robots on the basis of the contents of the task, and
the reservation processing part causes the storage part to store the operator identification information, the robot identification information, operation apparatus identification information for identifying the operation apparatus to be used selected by the selection part, and a reservation period during which the robot to be used and the operation apparatus to be used become available.

5. The reservation apparatus according to claim 4, wherein the selection part selects a combination of the robot to be used and the operation apparatus to be used on the basis of the contents of the task.

6. The reservation apparatus according to claim 4 or 5, wherein the selection part transmits, to an information terminal used by the operator, candidate robot information indicating one or more candidate robots that can be used by the operator and candidate operation apparatus information indicating one or more candidates operation apparatuses, and selects the robot to be used and the operation apparatus to be used on the basis of information indicating a result of a selection by the operator in the information terminal.

7. The reservation apparatus according to any one of claims 4 to 6, wherein the operator information acquisition part acquires position information indicating a location of the operator, and
the selection part further selects the operation apparatus to be used on the basis of the location indicated by the position information.

8. The reservation apparatus according to any one of claims 5 to 7, wherein the selection part selects one or more candidate robots that can be used for the contents of the task from among the plurality of robots, and selects an operation apparatus that can operate the selected one or more candidate robots from among the plurality of operation apparatuses as the operation apparatus to be used.

9. The reservation apparatus according to any one of claims 5 to 8, wherein the operator information acquisition part acquires, from a storage medium storing a rate, fee information indicating a robot usage fee of each of the plurality of robots and an apparatus usage fee of each of the plurality of operation apparatuses, and acquires, from the operator, budget information indicating a budget of the operator, and
the selection part selects the robot to be used and the operation apparatus to be used on the basis of the budget indicated by the budget information, the robot usage fee, and the apparatus usage fee.

10. The reservation apparatus according to any one of claims 1 to 8, wherein the operator information acquisition part acquires a robot usage fee of each of the plurality of robots from a storage medium storing a rate, and acquires reward information indicating a reward amount which the operator can receive for the task from the operator, and
the selection part selects the robot to be used on the basis of the relationship between the robot usage fee and the reward amount.

11. The reservation apparatus according to any one of claims 1 to 10 further having
a skill storage part that stores an operating skill of the operator in association with the operator identification information and robot identification information of a robot which the operator has used among the plurality of robots, wherein
the selection part selects, by referencing the skill storage part, the robot to be used on a condition that the operating skill of the operator corresponding to the robot to be used is equal to or higher than an allowable level.

12. The reservation apparatus according to any one of claims 1 to 11 further having
an information providing part that provides, to the operator, job information indicating a plurality of tasks for which a worker is wanted, wherein
the operator information acquisition part acquires, as the task information, information including contents of the task selected by the operator from among the plurality of tasks indicated by the job information provided by the information providing part.

13. The reservation apparatus according to claim 12, wherein
the selection part selects the robot to be used corresponding to the contents of the task indicated by the task information when the operator information acquisition part acquires the task information from the operator, and
the reservation processing part reserves the robot to be used selected by the selection part and notifies a profile of the operator to a provider of the job information.

14. The reservation apparatus according to any one of claims 1 to 13 further having
a robot information acquisition part that acquires robot information indicating an action status of the robot, wherein
the selection part selects the robot to be used from among a plurality of robots whose action statuses are indicated as not in action by the robot information.

15. The reservation apparatus according to claim 14, wherein the robot information acquisition part acquires, as the robot information, operation data which is transmitted to the robot from an operation apparatus for operating the robot.

16. The reservation apparatus according to any one of claims 1 to 15, wherein the reservation processing part transmits information for permitting the robot to perform an action based on the operation data transmitted to the robot from an operation apparatus for operating the robot within the reservation period.

17. The reservation apparatus according to any one of claims 1 to 16, wherein the selection part selects the robot to be used on the basis of frequency of use of the plurality of robots.

18. The reservation apparatus according to any one of claims 1 to 17, wherein the selection part selects another robot from the plurality of robots on the basis of the contents of the task when the selection part detects that the robot operated by the operator has broken down during the operation, and
the reservation processing part causes the storage part to store (i) the reservation period stored in the storage part in association with the broken-down robot and (ii) the robot identification information of the other robot selected by the selection part in association with each other.

19. The reservation apparatus according to claim 18, wherein the reservation processing part notifies the operator of information indicating the date and time the other robot is available if there is no other robot that can be selected by the selection part at a point in time when the robot has broken down.

20. The reservation apparatus according to any one of claims 1 to 19, wherein the selection part selects, as the robot to be used, a second robot that can be used for another task in a time period between the plurality of tasks performed by a first robot, and
the reservation processing part 134 causes the storage part to store robot identification information of the first robot in association with a reservation period of the first robot and robot identification information of the second robot in association with a reservation period of the second robot.

21. The reservation apparatus according to any one of claims 1 to 20, wherein the selection part selects the robot to be used on the basis of a time difference between a place where the operator is scheduled to operate the robot and a place where the robot to be operated by the operator performs an action.

22. The reservation apparatus according to any one of claims 1 to 21, wherein the reservation processing part causes the storage part to store the reservation period by correcting a desired reservation period acquired from the operator on the basis of a time difference between a place where the operator is scheduled to operate the robot and a place where the robot to be operated by the operator performs an action.

23. A reservation method having the steps of:
acquiring task information indicating contents of a task to be executed using any of a plurality of robots in association with operator identification information for identifying an operator operating a robot;
selecting a robot to be used by the operator from the plurality of robots on the basis of the content of task indicated by the task information; and
causing a storage part to store, in association with the operator identification information, robot identification information for identifying the selected robot to be used and a reservation period during which the robot to be used becomes available,
that are executed by a computer.

24. A reservation system comprising:
a reservation apparatus that manages a reservation status of a robot; and
an information terminal capable of communicating with the reservation apparatus; wherein
the reservation apparatus includes
an operator information acquisition part that acquires task information indicating contents of a task to be executed using any of a plurality of robots from the information terminal,
a selection part that selects a robot to be used by the operator who uses the information terminal from among the plurality of robots on the basis of the content of task indicated by the task information, and
a reservation processing part that causes a storage part to store, in association with identification information for identifying the operator, robot identification information for identifying the robot to be used selected by the selection part, and transmitting reservation information indicating a reservation period during which the robot to be used becomes available to the information terminal, wherein
the information terminal includes a display part that displays the reservation information received from the reservation processing part.
